(19) Europäisches Patentamt
European Patent Office
Office européen des brevets

(11) **EP 4 092 542 A1**

(12) **EUROPEAN PATENT APPLICATION**
published in accordance with Art. 153(4) EPC

(43) Date of publication:
**23.11.2022 Bulletin 2022/47**

(21) Application number: **21741788.0**

(22) Date of filing: **15.01.2021**

(51) International Patent Classification (IPC):
***G06F 16/215*** (2019.01)

(52) Cooperative Patent Classification (CPC):
**G06F 16/215**

(86) International application number:
**PCT/JP2021/001366**

(87) International publication number:
**WO 2021/145453 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.01.2020 JP 2020005914**

(71) Applicant: **Hitachi, Ltd.**
**Tokyo 100-8280 (JP)**

(72) Inventors:
• **TSUKANO Natsuki**
**Tokyo 100-8280 (JP)**
• **YAMAMOTO Dan**
**Tokyo 100-8280 (JP)**
• **KAWAMURA Shunji**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **DATA RELIABILITY CALCULATING DEVICE, DATA RELIABILITY CALCULATING METHOD, AND DATA RELIABILITY CALCULATING PROGRAM**

(57)    A data reliability calculation device holds a data user score for each data user of data, a data provider score for each data provider of data, and data reliability for each data, and when calculating the data reliability of certain data, the data reliability of the data is calculated on the basis of the data user score of the data user using the data, the data provider score using the data, and the data reliability of the original data of the data. Specifically, when calculating the data reliability of certain data, a value obtained by adding the sum of the data user scores of the data users using the data, the data provider scores of the data providers of the data, and the arithmetic average of the reliability of the original data is calculated as the data reliability of the data. Accordingly, when using data, it is possible to present a quantitative index of how reliable the data to be used is.

FIG. 11

**Description**

Technical Field

The present invention relates to a data reliability calculation device, a data reliability calculation method, and a data reliability calculation program, and particularly to a data reliability calculation device, a data reliability calculation method, and a data reliability calculation program that are suitable for immediately presenting data reliability to a user and promoting the distribution of data with respect to a data linkage system for capturing data from the outside.

Background Art

With an increase in expectations for utilization of data such as open data and big data in recent years, the improvement of frameworks related to data distribution, transactions, and linkage and technologies for handling data through an information processing system has been progressing. In addition, with the rapid spread of the Internet, the type and amount of data to be disclosed are increasing year by year.

In data distribution, a mechanism including a data provider who provides data, a data user who uses the provided data, and a data linkage system that supports data exchange between the data user and the data provider has been considered.

In such a mechanism of the data linkage system, the data user selects data before using the data. At this time, the quality of data items and data histories disclosed by the data provider is checked on the basis of a standard such as whether or not the mechanism meets the requirements of an application or the like to be developed.

As a prior art for supporting data selection by an information processing system, there is, for example, Patent Literature 1. According to Patent Literature 1, a data flow control device matches device-side metadata indicating the history of data provided by the device with application-side metadata indicating the history of data required by an application, so that a device capable of providing data having the history of data provision as a specification required by the application is extracted from among a plurality of devices, and the accuracy and quality of data required by a user can be guaranteed.

Citation List

Patent Literature

[Patent Literature 1] Japanese Unexamined Patent Application Publication No. 2017-111501

Summary of Invention

Technical Problem

The prior art described in Patent Literature 1 focuses on the fact that the application side selects the optimum sensing data output from a plurality of sensors in the background of the trend of IoT (Internet of Things) or the like.

However, according to Patent Literature 1, the data user needs to set not only data items but also the history of the data required by the application as the application-side metadata, and if this is to be carried out, specialized knowledge such as a statistical method and a processing method of the data and domain knowledge of the data is necessary, and there is a possibility that the data cannot be easily searched.

In addition, Patent Literature 1 does not disclose to show a quantitative index indicating the degree of reliability with which a data user can use certain data.

An object of the present invention is to provide a data reliability calculation device, a data reliability calculation method, and a data reliability calculation program that can present a quantitative index of how reliable the data to be used is, even for a data user who cannot fill in a data history due to little specialized knowledge or has difficulty understanding the data history of provided data.

Solution to Problem

A configuration of a data reliability calculation device of the present invention is a data reliability calculation device that calculates data reliability when using data, the device holds a data user score for each data user of data, a data provider score for each data provider of data, and data reliability for each data, and when calculating the data reliability of certain data, the data reliability of the data is calculated on the basis of the data user score of the data user using the data, the data provider score using the data, and the data reliability of the original data of the data.

Advantageous Effects of Invention

According to the present invention, it is possible to provide a data reliability calculation device, a data reliability calculation method, and a data reliability calculation program that can present a quantitative index of how reliable the data to be used is, even for a data user who cannot fill in a data history due to little specialized knowledge or has difficulty understanding the data history of provided data.

Brief Description of Drawings

FIG. 1 is an entire configuration diagram of a data reliability calculation system.
FIG. 2 is a functional configuration diagram of a data reliability calculation device.
FIG. 3 is a functional configuration diagram of a data linkage device.
FIG. 4 is a hardware/software configuration diagram of the data reliability calculation device.
FIG. 5 is a hardware/software configuration diagram of the data linkage device.
FIG. 6 is a diagram for showing an example of a data catalog.
FIG. 7 is a diagram for showing an example of a history information table.
FIG. 8 is a diagram for showing an example of a data linkage recording table.
FIG. 9 is a diagram for showing an example of a user information table.
FIG. 10 is a sequence for showing a series of processing in which the data reliability calculation system calculates and displays the data reliability.
FIG. 11 is a flowchart for showing processing of data reliability calculation.
FIG. 12A is a graph for showing a data related model of calculation in data reliability calculation processing (part 1).
FIG. 12B is a graph for showing a data related model of calculation in data reliability calculation processing (part 2) .

Description of Embodiments

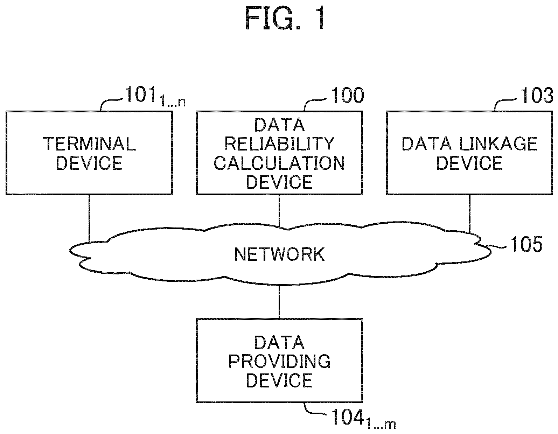

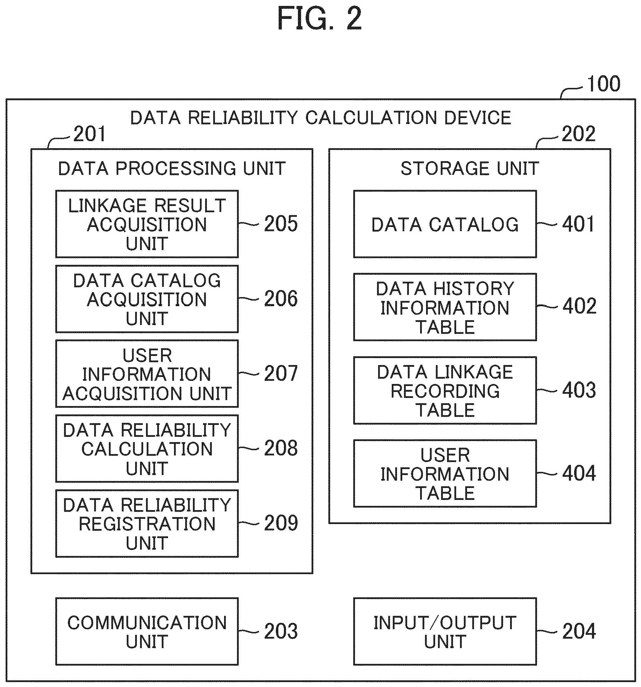

In the embodiment, a system in which the reliability of data is calculated by using the use history of the data and the history of the data and is presented to a data user will be described.
First, a configuration of a data reliability calculation system will be described by using FIG. 1 to FIG. 5.
As shown in FIG. 1, the data reliability calculation system is a service system configured using a plurality of terminal devices 101, a data reliability calculation device 100, a data linkage device 103, and a plurality of data providing devices 104 that are connected to a network 105 such as the Internet.
The terminal device 101 (in the drawing, denoted as terminal devices 1011...n) is a device for a data user to search usable data and to use data of other server devices with application software. In the terminal device 101, the data user can search usable data by using a Web browser or the like installed in the terminal device 101, and can use data acquired from the data linkage device 103 or the data providing device 104 with application software on the client side or the server side. The terminal device 101 can be realized by an information processing device such as a general personal computer.
The data reliability calculation device 100 is a device for calculating the reliability of data on the basis of a request from the data linkage device 103.
The data linkage device 103 is a device for supporting linkage between a data provider and the data user.
The data providing device 104 (in FIG. 1, denoted as data providing devices 1041...m) is a device for providing data in response to a request from the terminal device 101 of the data user.
All of the data reliability calculation device 100, the data linkage device 103, and the data providing device 104 can be realized by a general information processing device such as a server device.
In addition, the functions of the terminal device 101, the data reliability calculation device 100, the data linkage device 103, and the data providing device 104 can be constructed on one server, and some functions of the respective devices can be performed by other devices. For example, the data reliability calculation device 100 and the data linkage device 103 may be constructed on the same server, and functions related to transmission and reception of data by a data linkage function unit 307 of the data linkage device 103 can be realized in the terminal device 101 and the data providing device 104.
Next, functional configurations of the data reliability calculation device will be described by using FIG. 2.
As shown in FIG. 2, the data reliability calculation device 100 includes, as functional configurations, a data processing unit 201, a storage unit 202, a communication unit 203, and an input/output unit 204.
The data processing unit 201 is a functional unit for performing operations and various types of processing of data handled by the data reliability calculation device 100. The data processing unit 201 includes, as sub-components, a linkage result acquisition unit 205, a data catalog acquisition unit 206, a user information acquisition unit 207, a data reliability calculation unit 208, and a data reliability registration unit 209.

The linkage result acquisition unit 205 is a functional unit for acquiring a data linkage result from the data linkage device 103. The data catalog acquisition unit 206 is a functional unit for acquiring a data catalog (to be described later). The user information acquisition unit 207 is a functional unit for acquiring information of a data provider and a data user. The data reliability calculation unit 208 is a functional unit for calculating the data reliability on the basis of data acquired from the outside. The data reliability registration unit 209 is a functional unit for registering the calculated data reliability in the data catalog of the data linkage device 103.

The storage unit 202 is a functional unit for storing data handled by the data reliability calculation device 100. The storage unit 202 holds a data catalog 401, a data history information table 402, a data linkage recording table 403, and a user information table 404. It should be noted that details of each table will be described later.

The communication unit 203 is a functional unit for communicating with the data linkage device 103 via the network 105. The input/output unit 204 is a functional unit for inputting data and commands by the administrator from the outside or outputting information to the administrator by using an input/output device.

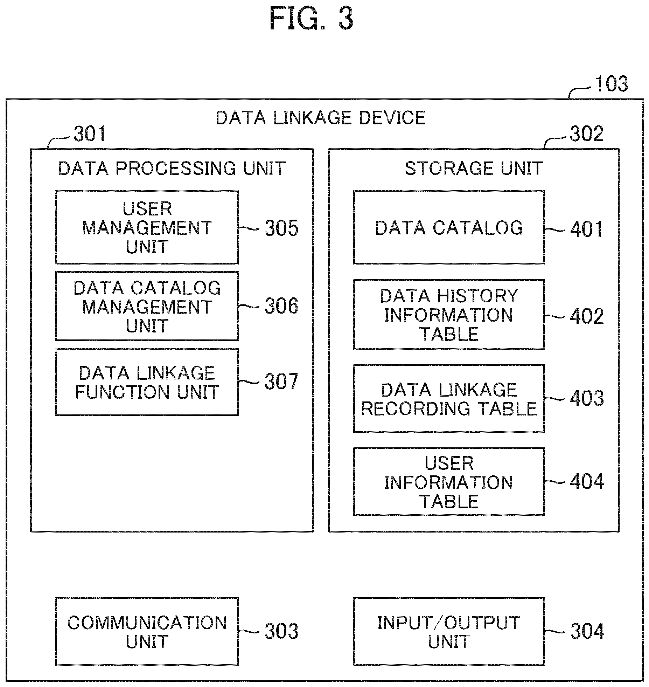

Next, functional configurations of the data linkage device will be described by using FIG. 3.

As shown in FIG. 2, the data linkage device 103 includes, as functional configurations, a data processing unit 301, a storage unit 302, a communication unit 303, and an input/output unit 304.

The data processing unit 301 includes, as sub-components, a user management unit 305, a data catalog management unit 306, and a data linkage function unit 307.

The user management unit 305 is a functional unit for registering, updating, and deleting accounts of a data provider and a data user and managing authentication information such as a password and an electronic certificate. The data catalog management unit 306 is a functional unit for managing information such as the identifier, title, creator, and history information of data. The data linkage function unit 307 is a functional unit for supporting data exchange between a data user and a data provider.

The storage unit 302 is a functional unit for storing data handled by the data linkage device 103. The storage unit 302 holds the data catalog 401, the data history information table 402, the data linkage recording table 403, and the user information table 404. It should be noted that details of each table will be described later.

The communication unit 303 is a functional unit for communicating with the terminal device 101, the data providing device 104, and the data reliability calculation device 100 via the network 105. The input/output unit 204 is a functional unit for inputting data and commands by the administrator from the outside or outputting information to the administrator by using an input/output device.

When exchanging data between a data user and a data provider, there are cases of data exchange via the data linkage device 103 and direct data exchange between the data user and the data provider without via the data linkage device 103. In either case, the results of the data linkage are recorded in the data linkage device 103. For example, in the case where data is exchanged via the data linkage device 103, the data linkage function unit 307 records the result of providing data in response to a data request by the data user in the storage unit 302 as the data linkage recording table 403. In the case where data is exchanged without via the data linkage device 103, a linkage result of data is transmitted to the data linkage device 103 from an application installed in the terminal device 101 or an application installed in the data providing device 104, and the data linkage device 103 having received the data linkage result registers the linkage result in the data linkage recording table 403.

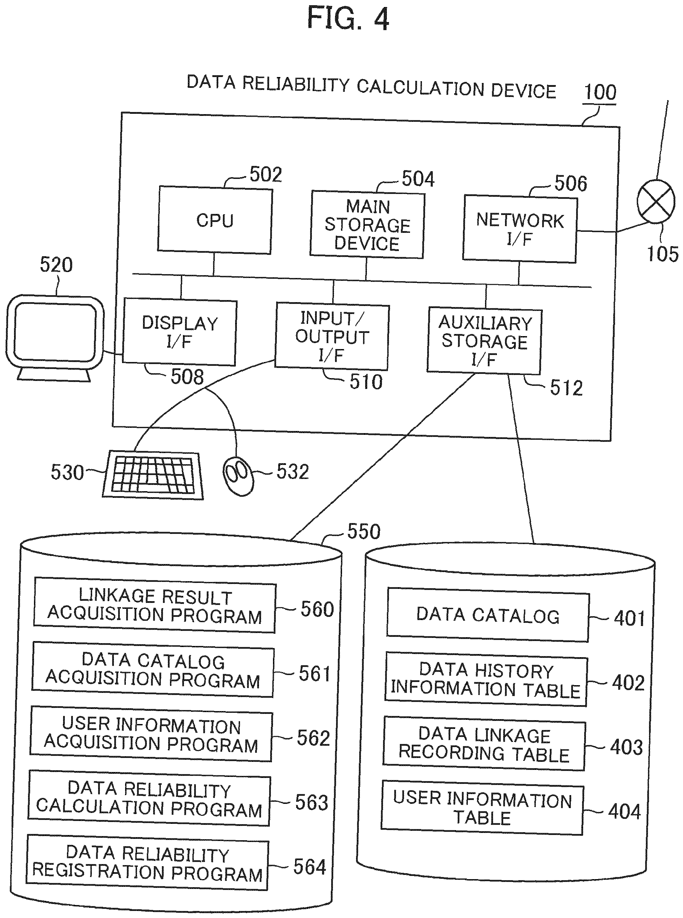

Next, hardware/software configurations of the data reliability calculation device will be described by using FIG. 4.

As hardware configurations, the data reliability calculation device 100 is realized by, for example, a general information processing device such as the server device shown in FIG. 4.

The data reliability calculation device 100 has a configuration in which a CPU (Central Processing Unit) 502, a main storage device 504, a network I/F (InterFace) 506, a display I/F 508, an input/output I/F 510, and an auxiliary storage I/F 512 are connected to each other via a bus.

The CPU 502 controls each unit of the data reliability calculation device 100, and loads a necessary program into the main storage device 504 to execute the same.

The main storage device 504 is usually configured using a volatile memory such as RAM, and stores programs executed by the CPU 502 and data to be referred to.

The network I/F 506 is an interface for connecting to the network 105.

The display I/F 508 is an interface for connecting a display device 520 such as an LCD (Liquid Crystal Display).

The input/output I/F 510 is an interface for connecting an input/output device. In the example of FIG. 4, a keyboard 530 and a mouse 532 as a pointing device are connected to each other.

The auxiliary storage I/F 512 is an interface for connecting an auxiliary storage device such as an HDD (Hard Disk Drive) 550 or an SSD (Solid State Drive).

The HDD 550 has a large storage capacity and stores programs for executing the embodiment. A linkage result acquisition program 560, a data catalog acquisition program 561, a user information acquisition program 562, a data reliability calculation program 563, and a data reliability registration program 564 are installed in the HDD 550 of the data reliability calculation device 100.

All or some of these programs may be installed in advance or, if necessary, may be installed from a non-temporary storage device of another device via a network or from a non-temporary storage medium.

The linkage result acquisition program 560, the data catalog acquisition program 561, the user information acquisition program 562, the data reliability calculation program 563, and the data reliability registration program 564 are programs that realize the functions of the linkage result acquisition unit 205, the data catalog acquisition unit 206, the user information acquisition unit 207, the data reliability calculation unit 208, and the data reliability registration unit 209, respectively.

In addition, the HDD 550 of the data reliability calculation device 100 stores the data catalog 401, the data history information table 402, the data linkage recording table 403, and the user information table 404.

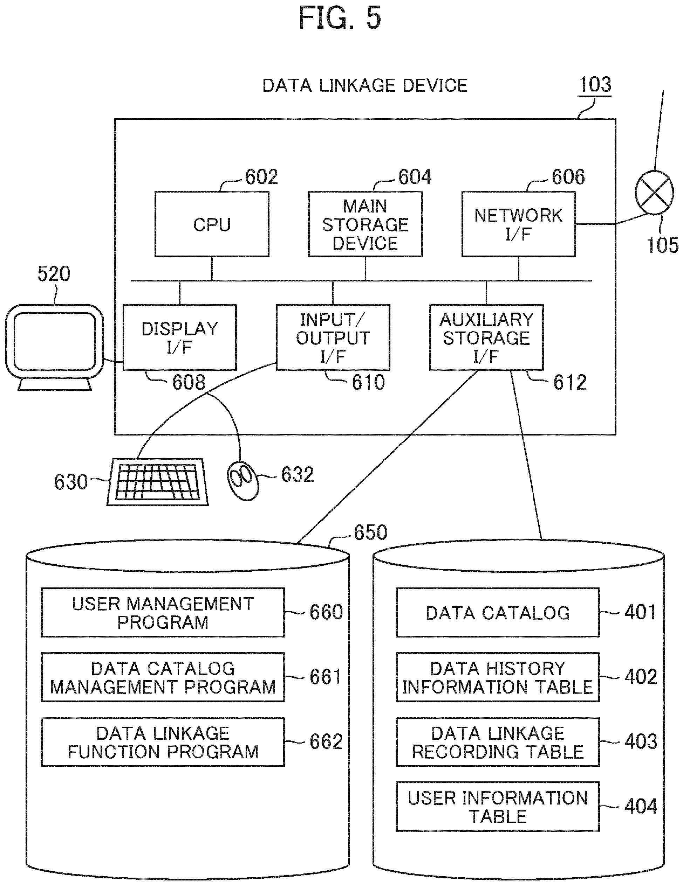

Next, hardware/software configurations of the data linkage calculation device will be described by using FIG. 5.

As similar to the data reliability calculation device 100, as hardware configurations, the data linkage device 103 is realized by a general information processing device such as the server device shown in FIG. 5, and the hardware configurations thereof are the same.

A user management program 660, a data catalog management program 661, and a data linkage function program 662 are installed in an HDD 650 of the data linkage device 103.

All or some of these programs may be installed in advance or, if necessary, may be installed from a non-temporary storage device of another device via a network or from a non-temporary storage medium.

The user management program 660, the data catalog management program 661, and the data linkage function program 662 are programs that realize the functions of the user management unit 305, the data catalog management unit 306, and the data linkage function unit 307, respectively.

In addition, the HDD 650 of the data linkage device 103 stores the data catalog 401, the data history information table 402, the data linkage recording table 403, and the user information table 404.

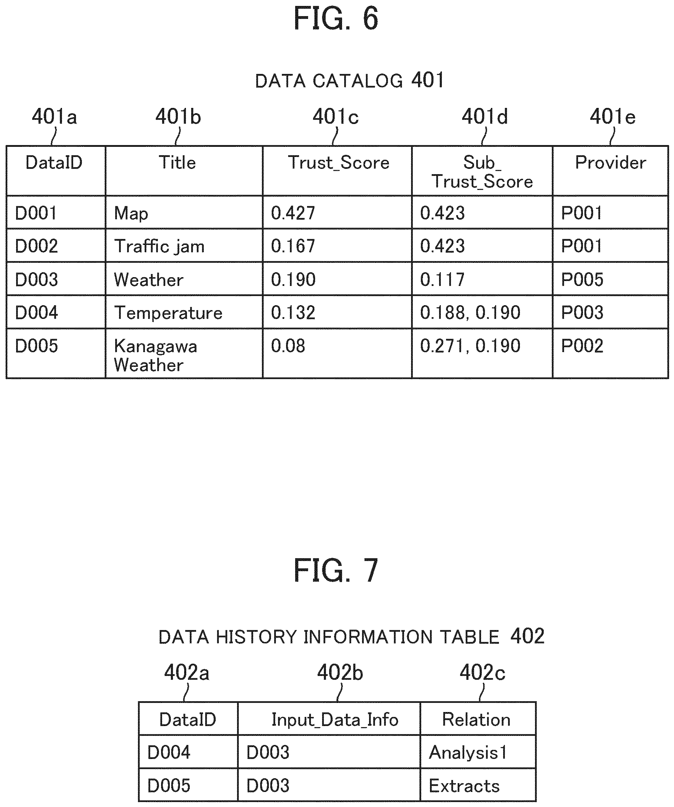

Next, a data structure used in the data reliability calculation system of the embodiment will be described by using FIG. 6 to FIG. 9.

The data catalog 401 is a table for holding basic information related to data, and as shown in FIG. 6, holds items of [DataID] 401a, [Title] 401b, [Trust_Score] 401c, [Sub_Score] 401d, and [Provider] 401f.

[DataID] 401a is an item in which the unique identifier of data is stored. [Title] 401b is an item in which the name assigned to the data by the data provider is stored. For example, although it is conceivable to use serial numbers such as D001, D002, and D003 as the data IDs stored in [DataID] 401a, the name assigned to the data stored in [Title] 401b is desirably a name that the user can imagine the content of the data, and the examples thereof are, as shown in FIG. 6, values such as Weather, Temperature, and Traffic jam.

[Trust_Score] 401c stores a quantitative value that is the reliability of data calculated by the data reliability calculation device. The calculation processing of the data reliability will be described in detail later. [Sub_Score] 401d stores an auxiliary data reliability for [Trust_Score] 401c. For example, as [Sub_Score] 401d, the score of the data provider of the data, the score of the previous data based on the history of the data, the frequency of use of the data, and the like can be set. In addition, the auxiliary data reliability of [Sub_Score] 401d may be set by considering an evaluation or the like related to the data when information is disclosed on the Web.

[Provider] 401e holds information of the data provider providing the data. For example, the user ID of the data provider is set.

It should be noted that the items of the data catalog 401 are not limited to the above items, but may include items such as a data creator, a data update frequency, a data accuracy, a last update date, and a right and can also be used for calculating the data reliability.

Next, the data history information table 402 is a table for holding the history of data, and as shown in FIG. 7, holds items of [DataID] 402a, [Input_Data_Info] 402b, and [Relation] 402c.

[DataID] 402a is an item in which the unique identifier of data is stored. [Input_Data_Info] 402b holds a data ID of data before processing the corresponding data or data to be derived from. [Relation] 402c shows the relationship between the data indicated by the data ID of [Input_Data_Info] 402b and the data indicated by [DataID] 402a.

As the history information held in the data history information table 402, it is conceivable to manage information of data used in creating the data, sensor information, and a processing method. For example, FIG. 7 exemplifies that when the data indicated by D004 was created, the data indicated by D003 was used, and the processing of analysis processing 1 (Anlysis 1) was performed as a processing process. In addition, FIG. 7 exemplifies that when the data indicated by D005 was created, the data indicated by D003 was used, and extract processing (Extract) was performed as a processing process.

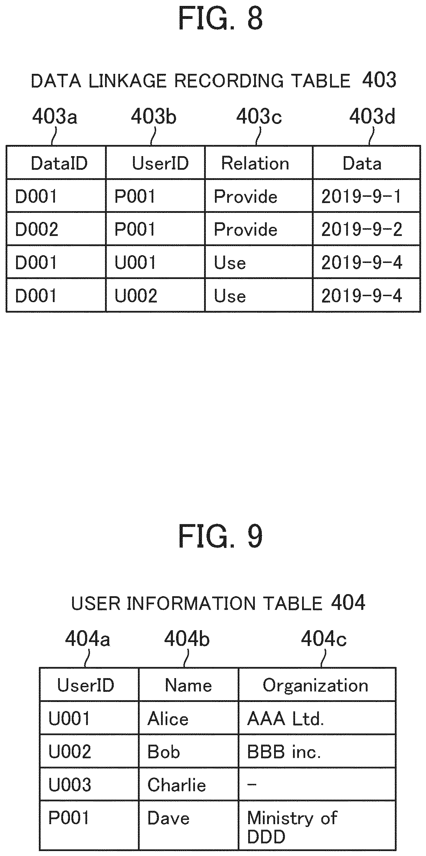

Next, the data linkage recording table 403 is a table for holding information related to the provision and use of data, and as shown in FIG. 8, holds items of [DataID] 403a, [UserID] 403b, [Relation] 403d, and [Date] 403e.

[DataID] 403a is an item in which the unique identifier of data is stored. [UserID] 403b is an item in which the unique identifier- of the user who provided or used the data is stored. [Relation] 403d stores information indicating whether the data was provided or used. [Date] 403e stores information indicating the date on which the data was provided or used.

These pieces of information indicate that the data indicated by the data ID of [DataID] 403a was provided or used by the user indicated by the user ID of [UserID] 403. For example, FIG. 8 exemplifies that the data indicated by D001 was provided by the user (provider) indicated by P001 on 2019-9-1. In addition, FIG. 8 exemplifies that the data indicated by D001 was used by the user (user) indicated by U002 on 2019-9-4.

Next, the user information table 404 is a table for holding basic information related to the data provider and the data user, and as shown in FIG. 8, holds items of [UserID] 402a, [Name] 402b, and [Organization] 402c. [UserID] 402a is an item in which the unique identifier of the user who used the data is stored. [Name] 402b stores the name of the user who used the data. It should be noted that in the case where the individual name of the user is set in [Name] 402b, it is conceivable to set a department name or the like. [Organization] 402c stores information of the organization to which the individual stored in [Name] 402b belongs, and information such as the company name to which the department name or the like stored in [Name] 402b belongs.

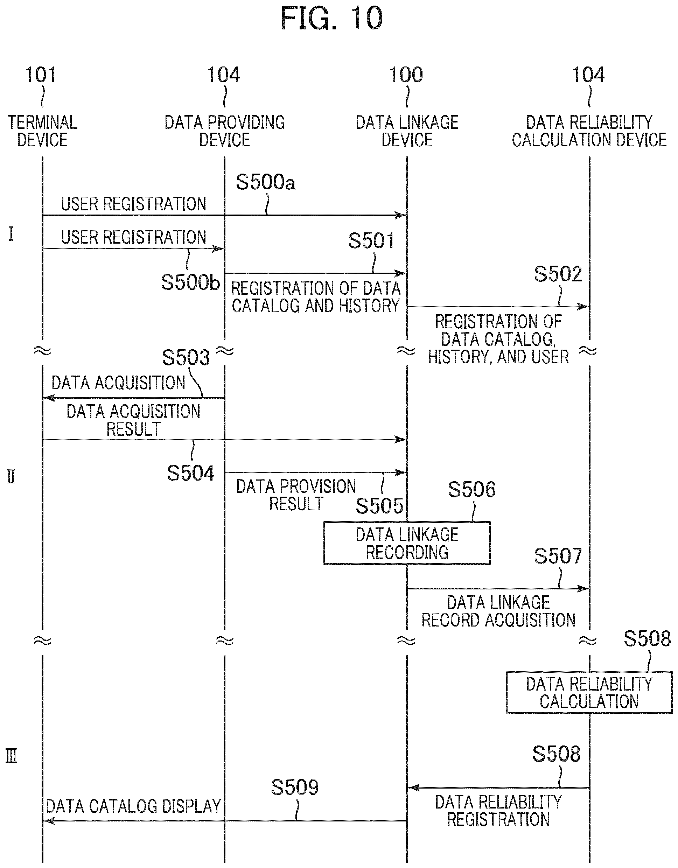

Next, a series of processing in which the data reliability calculation system calculates and displays the data reliability will be described by using FIG. 10.

This processing can be largely divided into three phases. Specifically, the phases include a phase (I) in which the data provider registers the data catalog, a phase (II) in which the data user uses the data, and a phase (III) in which the data reliability is calculated and displayed.

Phase (I) in which the data provider registers the data catalog

First, the data user registers user information in the data providing device 104 and the data linkage device 103 (S500a and S500b).

Next, the data providing device 104 registers the information of the data catalog and the history information in the data linkage device 103 (S501), and the data linkage device 103 records the information of the data provider together therewith.

Next, the data reliability calculation device 100 acquires the data catalog from the data linkage device 103 at a timing when the data catalog of the data linkage device 103 is registered or a predetermined timing such as a date and time (S502).

Phase (II) in which the data user uses the data

Next, the data user specifies the data provider holding the data he/she wants to use, confirms the data reliability, and then acquires the data from the data provider 104 (S503). The terminal device 101 that has acquired the data transmits the acquisition result of the data to the data linkage device 103 (S504). On the other hand, the data providing device 104 that has provided the data also transmits the provision result of the data to the data linkage device 103 (S505). The data linkage device 103 records the linkage result of the data on the basis of the data received from the terminal device 101 and the data providing device 104 (S506). The data reliability calculation device 100 acquires the data linkage record from the data linkage device 103 at a timing when the data linkage result is recorded or a predetermined timing such as a prescribed date and time (S507).

It should be noted that in the case where the data user acquires the data, in addition to the case where the terminal device 101 directly acquires the data from the data providing device 104, there may be a case where the data provider transmits the data from the data providing device 104 to the data linkage device 103 and acquires the data from the data linkage device 103. It should be noted that in the case where an application for transmitting the result of the data linkage is not installed in the terminal device 101, the data linkage device 103 creates the data linkage record by using the information received from the data providing device 104.

Phase (III) in which the data reliability is calculated and displayed

Next, the data reliability calculation device 100 calculates the data reliability on the basis of the acquired data catalog and the linkage result of the data (S508), and registers the calculated data reliability in the data linkage device 103 (S509). The data user displays the information of the data catalog from the data linkage device 103 by using the terminal device 101, and confirms the data reliability of each data (S509) .

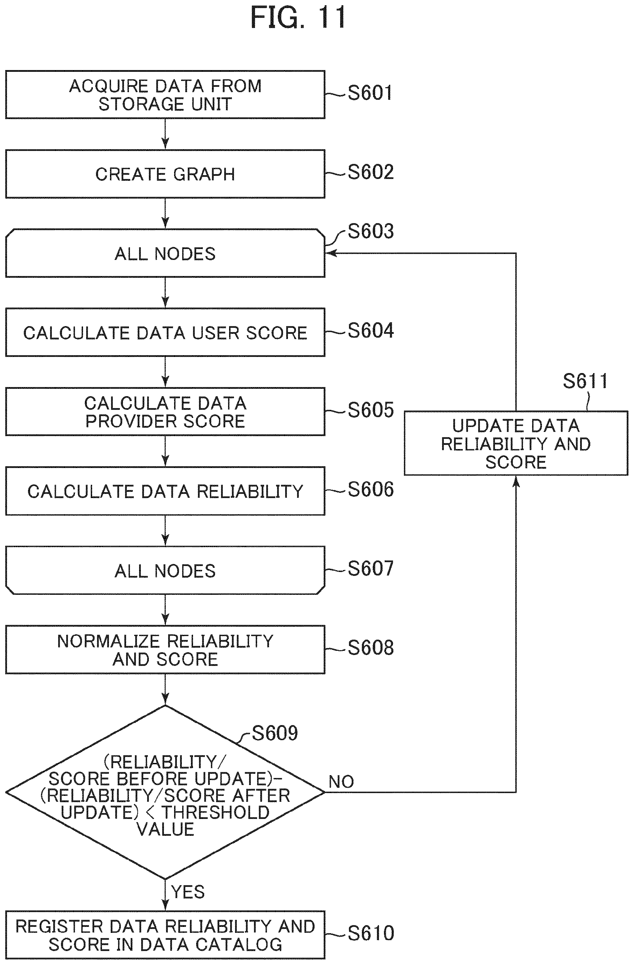

Next, processing in which the data reliability calculation device calculates the data reliability will be described by using FIG. 11 to FIG. 12B.

As shown in FIG. 10, the processing of the data reliability calculation is processing performed by the data reliability calculation device 100 while referring to various tables and corresponding to S508 in FIG. 10.

In the embodiment, in order to calculate the data reliability, the following assumptions related to the data reliability are provided. 1) Data used by many users is highly reliable. 2) Other pieces of data provided by the data provider who created highly-reliable data are highly reliable to some extent. 3) Data obtained by processing highly-reliable data is highly reliable to some extent.

The processing for calculating the data reliability is processing in which the cross reference of the data is recursively performed because the data reliability is used for score calculation of the data provider and the data user and the scores of the data user and the data provider are used for the calculation of the data reliability. In order to determine the termination of the processing, the data reliability, the data provider scores, and the data user scores related thereto before and after the data update are compared with each other, and when becoming equal to or less than a certain threshold value, it is determined that these values have converged, and the processing is terminated.

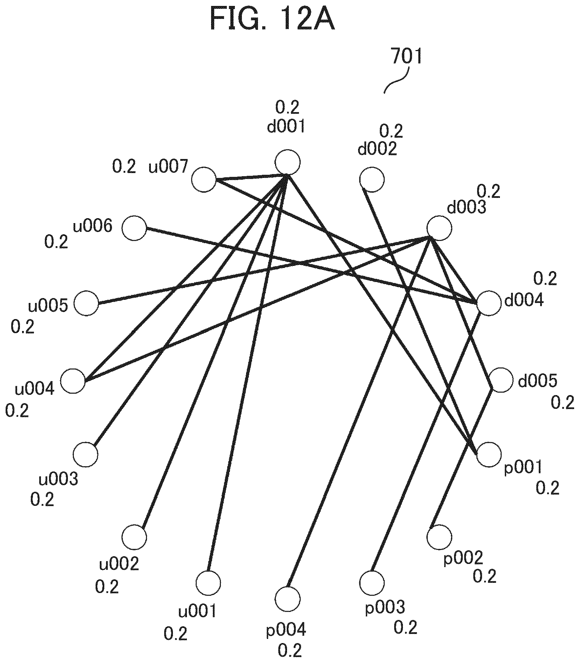

First, the data reliability calculation device acquires the data stored in the storage unit 202 (S601), and creates a data related graph 700 as shown in FIG. 12A (S602). Specifically, nodes corresponding to data, nodes corresponding to data users, and nodes corresponding to data providers are arranged from a list of data from the data catalog 401 and a list of data users and data providers acquired from the user information table 404. In FIG. 12A, nodes (D nodes) denoted as DXXX are nodes corresponding to data, nodes denoted as PXXX are nodes (P nodes) corresponding to data providers, and nodes (U nodes) denoted as UXXX are nodes corresponding to data users. The numerical values described on the outer periphery of the respective nodes are the data reliability, the data provider scores, and the data user scores. In addition, in the following description, the data represented by the node DXXX is simply represented as "data DXXX".

Next, all of the data users using data and the data are connected by edges on the basis of the information of the data linkage recording table 403. For example, a data user U001 using data D001 is connected. Next, all of the data providers providing data and the data are connected by edges. For example, all of the data providers P001 having provided the data D001 are connected by edges. Next, all of the original data of certain data and the data are connected by edges on the basis of the records of the data history information table 402. For example, certain data D004 and original data D003 thereof are connected by an edge.

Next, the processing of S604 to S606 is repeated for all the nodes (S603 to S607).

In the loop, a data user score is first calculated on the basis of the created data related graph 700 (S604).

As an example of the data user score, it is conceivable to be the arithmetic average of the data reliability of all the data being used.

Next, a data provider score is calculated (S605). As an example of the data provider score, it is conceivable to be the average of the data reliability of all the data created by the data provider.

Next, the reliability of data is calculated (S606). As an example of the reliability of data, it is conceivable that the sum of the data user scores of the data users using the data, the data provider scores of the data providers of the data, and the arithmetic average of the reliability of the original data acquired from the history are added to each other.

That is, the reliability of data d is expressed by the following (Equation 1).
[Formula 1]

$$T(d) = \sum_{i=1}^{n} Su_i(d) + Sp(d) + \sum_{i=1}^{m} \frac{a_i T(d_i)}{m}$$

(Equation 1)

Here, $Su_i$ (d) (i=1 to n) is the data user score of the data user using the data d, Sp (d) is the data provider score of the provider of the data d, $d_i$ (i=1 to m) is the original data of the data d, and T ($d_i$) is the data reliability of the original data of the data d. This is based on the consideration that data used by many users can be regarded as high in the data reliability and data of a highly-reliable (high in the data provider score) data provider can be regarded as high in the data reliability. In addition, data whose original data is high in the data reliability is considered to be high in the data reliability. It should be noted that in consideration of the fact that there may be a plurality of pieces of original data (data is merged into one data), the arithmetic average of the data reliability of the original data is calculated here.

At this time, in the case of first created data having no processing history as history information, a predetermined initial value is set. In addition, on the assumption that the processing method affects the reliability, a coefficient $a_i$ (0<$a_i$<1) different for each processing method is multiplied by the reliability of the original data. For example, it is conceivable that in the case of merging data, the respective coefficients are set to $a_i$=0.9, in the case of only the extract processing with little modification of data, the coefficient is set to ai=0.8, and in the result of changing data by some statistical method, the coefficient is set to ai=0.3.

Next, the respective, data user scores, data provider scores, and data reliability obtained in S603 to S607 are normalized for each data user score, data provider score, and data reliability (S608).

Here, the normalization means that each value is allocated so that the sum of the respective values becomes one, and is expressed by the following (Equation 2) to (Equation 4).

[Formula 2]

$$T'(d) = \sum \frac{T(d)}{T(d_i)} \qquad \text{(Equation 2)}$$

i : All D nodes

$$Su'(u) = \sum \frac{Su(u)}{Su(u_i)} \qquad \text{(Equation 3)}$$

i : All U nodes

$$Sp'(p) = \sum \frac{Sp(p)}{Sp(p_i)} \qquad \text{(Equation 4)}$$

i : All P nodes

Here, T' (d) is the data reliability of the data d after the normalization, T (d) is the data reliability of the data d before the normalization, and $\Sigma$ in the denominator of (Equation 2) means that the sum is obtained for all the D nodes. As similar to the above, Su' (u) is the data user score of a data user u after the normalization, Su (u) is the data user score of the data user u before the normalization, and $\Sigma$ in the denominator of (Equation 3) means that the sum is obtained for all the U nodes. Further, as similar to the above, Sp' (p) is the data provider score of a data provider p after the normalization, Sp (p) is the data provider score of the data provider p before the normalization, and $\Sigma$ in the denominator of (Equation 4) means that the sum is obtained for all the P nodes.

Next, for all the data user scores, data provider scores, and data reliability, the differences between those before update (values at the time of the previous update) and those after update are calculated, and when all the differences are less than a threshold value (S609: YES), the data user scores, the data provider scores, and the data reliability are recorded in the data catalog 401 and the processing is terminated (S610).

It should be noted that in the case where one of the differences of the data user scores, the data provider scores, and the data reliability is equal to or larger than the threshold value (S609: NO) in S609, the data user score, the data provider score, and the data reliability at each node are updated (S611), and the processing returns to S603.

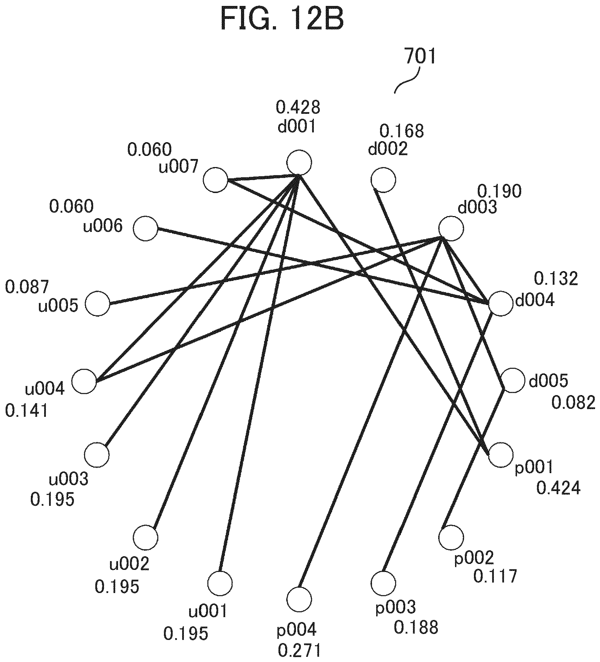

On the outer periphery of the respective node IDs in FIG. 12B, the respective data user scores, data provider scores, and data reliability when all the differences are less than the threshold value are described. For example, the data reliability of the data D001 is calculated to be 0.428, and the data reliability of the data D002 is 0.168. Both D002 and D004 have no data user, but the data D002 is connected to D001 via P001, and the reliability of P001 providing the highly-reliable data D001 is high as similar to D002 provided by P001.

It should be noted that when the reliability of the data is calculated in S606, it is conceivable that the user score is increased or decreased depending on the date of use of the data by using the data linkage recording table 403. For example, it is conceivable that the score of the user added to the data reliability is reduced by half in the case where the date of use of the data is over a year ago.

In addition, in the processing for calculating the data user score and the processing for calculating the data provider score in S604 and S604, it is conceivable to consider the affiliation of the data user or the data provider. For example, on the basis of the fact that Alice belongs to AAA Ltd. in the user information table 404, it is possible to reflect how reliable AAA Ltd. is in the data user score. Although a table indicating the information to which the data providers belong is not shown, a data provider information table similar to the user information table 404 may be prepared to indicate the affiliation for each data provider.

As described above, according to the embodiment, all the data users can easily determine how reliable the data is by using the data reliability calculated on the basis of a graph representing the frequency of use of the data, the relationship between the data and the data provider, and the relationship between the data and the data user.

List of Reference Signs

| | |
|---|---|
| 100 | data reliability calculation device |
| 101 | terminal device |
| 103 | data linkage device |
| 104 | data providing device |
| 105 | network |
| 201 | data processing unit |
| 202 | storage unit |
| 203 | communication unit |
| 204 | input/output unit |
| 205 | linkage result acquisition unit |
| 206 | data catalog acquisition unit |
| 207 | user information acquisition unit |
| 208 | data reliability calculation unit |
| 209 | data reliability registration unit |
| 301 | data processing unit |
| 302 | storage unit |
| 303 | communication unit |
| 304 | input/output unit |
| 305 | user management unit |
| 306 | data catalog management unit |
| 307 | data linkage function unit |
| 401 | data catalog |
| 402 | data history information table |
| 403 | data linkage recording table |
| 404 | user information table |
| 700 | data related graph |

**Claims**

1. A data reliability calculation device that calculates data reliability when using data, the device holding:

   a data user score for each data user of data;
   a data provider score for each data provider of data; and
   data reliability for each data, and
   wherein when calculating the data reliability of certain data, the data reliability of the data is calculated on the basis of the data user score of the data user using the data, the data provider score using the data, and the data reliability of the original data of the data.

2. The data reliability calculation device according to claim 1,
   wherein when calculating the data reliability of certain data, a value obtained by adding the sum of the data user scores of the data users using the data, the data provider scores of the data providers of the data, and the arithmetic average of the reliability of the original data is calculated as the data reliability of the data.

3. The data reliability calculation device according to claim 2,

   wherein history information of data including the data ID of original data, the data ID of processed data, and the type of data processing is held, and

wherein a coefficient determined for each type of data processing is multiplied by the reliability of each original data to obtain the arithmetic average of the reliability of the original data.

4. The data reliability calculation device according to claim 2,

wherein the data provider score is the arithmetic average of the data reliability of all the data created by the data provider,
wherein the data user score is the arithmetic average of the data reliability of all the data being used,
wherein an initial value is assigned for each data as the data reliability, and
wherein processing for obtaining a data user score from the data reliability of given data, processing for obtaining a data provider score from the data reliability of given data, and processing for obtaining the data reliability on the basis of the data user score, the data provider score, and the reliability of the original data are repeated until all changes in the data user score, the data provider score, and the data reliability fall within a certain threshold value.

5. The data reliability calculation device according to claim 1, further holding affiliation information of data users or affiliation information of data providers,
wherein the data user score is determined on the basis of the affiliation information of data users, and the data provider score is determined on the basis of the affiliation information of data providers.

6. A data reliability calculation device, further holding date information when the data was used or date information when the data was provided,
wherein the data reliability is determined on the basis of the date information when the data was used or the date information when the data was provided.

7. A data reliability calculation method for calculating data reliability when using data by a data reliability calculation device,

wherein the data reliability calculation device holds:

a data user score for each data user of data;
a data provider score for each data provider of data; and
data reliability for each data, and

wherein when calculating the data reliability of certain data, a step of calculating a value obtained by adding the sum of the data user scores of the data users using the data, the data provider scores of the data providers of the data, and the arithmetic average of the reliability of the original data as the data reliability of the data is provided.

8. A data reliability calculation program that is executed by a data reliability calculation device to calculate data reliability when using data,

wherein the data reliability calculation device holds:

a data user score for each data user of data;
a data provider score for each data provider of data; and
data reliability for each data, and

wherein when calculating the data reliability of certain data, a step of calculating a value obtained by adding the sum of the data user scores of the data users using the data, the data provider scores of the data providers of the data, and the arithmetic average of the reliability of the original data as the data reliability of the data is executed.

# FIG. 1

# FIG. 2

# FIG. 3

DATA LINKAGE DEVICE ~103

DATA PROCESSING UNIT ~301

| USER MANAGEMENT UNIT | ~305 |

| DATA CATALOG MANAGEMENT UNIT | ~306 |

| DATA LINKAGE FUNCTION UNIT | ~307 |

STORAGE UNIT ~302

| DATA CATALOG | ~401 |

| DATA HISTORY INFORMATION TABLE | ~402 |

| DATA LINKAGE RECORDING TABLE | ~403 |

| USER INFORMATION TABLE | ~404 |

| COMMUNICATION UNIT | ~303 |

| INPUT/OUTPUT UNIT | ~304 |

# FIG. 4

DATA RELIABILITY CALCULATION DEVICE    100

CPU    502

MAIN STORAGE DEVICE    504

NETWORK I/F    506

105

520

DISPLAY I/F    508

INPUT/ OUTPUT I/F    510

AUXILIARY STORAGE I/F    512

530    532

550

LINKAGE RESULT ACQUISITION PROGRAM    560

DATA CATALOG ACQUISITION PROGRAM    561

USER INFORMATION ACQUISITION PROGRAM    562

DATA RELIABILITY CALCULATION PROGRAM    563

DATA RELIABILITY REGISTRATION PROGRAM    564

DATA CATALOG    401

DATA HISTORY INFORMATION TABLE    402

DATA LINKAGE RECORDING TABLE    403

USER INFORMATION TABLE    404

# FIG. 5

DATA LINKAGE DEVICE <u>103</u>

CPU ~602

MAIN STORAGE DEVICE ~604

NETWORK I/F ~606

105

520

DISPLAY I/F ~608

INPUT/ OUTPUT I/F ~610

AUXILIARY STORAGE I/F ~612

630

632

650

USER MANAGEMENT PROGRAM ~660

DATA CATALOG MANAGEMENT PROGRAM ~661

DATA LINKAGE FUNCTION PROGRAM ~662

DATA CATALOG ~401

DATA HISTORY INFORMATION TABLE ~402

DATA LINKAGE RECORDING TABLE ~403

USER INFORMATION TABLE ~404

# FIG. 6

DATA CATALOG 401

| DataID | Title | Trust_Score | Sub_Trust_Score | Provider |
|--------|-------|-------------|-----------------|----------|
| D001 | Map | 0.427 | 0.423 | P001 |
| D002 | Traffic jam | 0.167 | 0.423 | P001 |
| D003 | Weather | 0.190 | 0.117 | P005 |
| D004 | Temperature | 0.132 | 0.188, 0.190 | P003 |
| D005 | Kanagawa Weather | 0.08 | 0.271, 0.190 | P002 |

401a 401b 401c 401d 401e

# FIG. 7

DATA HISTORY INFORMATION TABLE 402

| DataID | Input_Data_Info | Relation |
|--------|-----------------|----------|
| D004 | D003 | Analysis1 |
| D005 | D003 | Extracts |

402a 402b 402c

# FIG. 8

DATA LINKAGE RECORDING TABLE 403

| DataID | UserID | Relation | Data |
|--------|--------|----------|------|
| 403a | 403b | 403c | 403d |
| D001 | P001 | Provide | 2019-9-1 |
| D002 | P001 | Provide | 2019-9-2 |
| D001 | U001 | Use | 2019-9-4 |
| D001 | U002 | Use | 2019-9-4 |

# FIG. 9

USER INFORMATION TABLE 404

| UserID | Name | Organization |
|--------|------|--------------|
| 404a | 404b | 404c |
| U001 | Alice | AAA Ltd. |
| U002 | Bob | BBB inc. |
| U003 | Charlie | - |
| P001 | Dave | Ministry of DDD |

# FIG. 10

101  104  100  104

TERMINAL DEVICE  DATA PROVIDING DEVICE  DATA LINKAGE DEVICE  DATA RELIABILITY CALCULATION DEVICE

S500a

I  USER REGISTRATION

USER REGISTRATION

S500b  S501

REGISTRATION OF DATA CATALOG AND HISTORY

S502

REGISTRATION OF DATA CATALOG, HISTORY, AND USER

S503

DATA ACQUISITION

DATA ACQUISITION RESULT

II  S504

DATA PROVISION RESULT  S505  S506

DATA LINKAGE RECORDING

S507

DATA LINKAGE RECORD ACQUISITION

S508

DATA RELIABILITY CALCULATION

III  S508

S509

DATA CATALOG DISPLAY  DATA RELIABILITY REGISTRATION

# FIG. 11

```
ACQUIRE DATA FROM     ~S601
STORAGE UNIT
        │
        ▼
CREATE GRAPH          ~S602
        │
        ▼
ALL NODES             ~S603 ◄──────────┐
        │                              │
        ▼                              │
CALCULATE DATA USER SCORE  ~S604       │
        │                              │
        ▼                              │
CALCULATE DATA        ~S605            │
PROVIDER SCORE                  S611   │
        │                  ┌───────────┴──┐
        ▼                  │ UPDATE DATA   │
CALCULATE DATA RELIABILITY ~S606  │ RELIABILITY AND│
        │                  │ SCORE          │
        ▼                  └──────────▲──────┘
ALL NODES             ~S607           │
        │                              │
        ▼                              │
NORMALIZE RELIABILITY  ~S608           │
AND SCORE                              │
        │                              │
        ▼                              │
     ╱S609                             │
   ╱(RELIABILITY/    ╲                 │
  ╱ SCORE BEFORE UPDATE)- ╲  NO        │
  ╲(RELIABILITY/SCORE AFTER╱───────────┘
   ╲ UPDATE) < THRESHOLD  ╱
    ╲    VALUE          ╱
        │ YES
        ▼
REGISTER DATA RELIABILITY AND  ~S610
SCORE IN DATA CATALOG
```

# FIG. 12A

701

0.2
d001

0.2
d002

0.2 u007

0.2
d003

0.2 u006
0.2

0.2
d004

u005
0.2

d005
0.2

u004
0.2

p001
0.2

u003
0.2

u002
0.2

p002
0.2

u001
0.2

p004
0.2

p003
0.2

# FIG. 12B

701

## INTERNATIONAL SEARCH REPORT

| | International application No. |
|---|---|
| | PCT/JP2021/001366 |

| A. CLASSIFICATION OF SUBJECT MATTER |
|---|
| G06F 16/215(2019.01)i |
| FI: G06F16/215 |
| According to International Patent Classification (IPC) or to both national classification and IPC |

| B. FIELDS SEARCHED |
|---|
| Minimum documentation searched (classification system followed by classification symbols) |
| G06F16/215 |

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2007-183835 A (RICOH CO., LTD.) 19 July 2007 (2007-07-19) paragraphs [0020]-[0035] | 8<br>1-5, 7-8 |
| A | JP 2006-266760 A (HITACHI, LTD.) 05 October 2006 (2006-10-05) paragraphs [0074]-[0079] | 1-8 |
| A | JP 2002-77134 A (TOSHIBA CORP.) 15 March 2002 (2002-03-15) paragraph [0097] | 1-5, 7-8 |
| A | JP 2018-54503 A (FUJITSU LTD.) 05 April 2018 (2018-04-05) paragraphs [0185]-[0190] | 1-5, 7-8 |
| A | WO 2019/239456 A1 (MITSUBISHI ELECTRIC CORP.) 19 December 2019 (2019-12-19) paragraphs [0149]-[0153], fig. 27 | 1-5, 7-8 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 February 2021 (16.02.2021) | 23 March 2021 (23.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| Patent Documents referred in the Report | Publication Date | Patent Family | Publication Date |
|---|---|---|---|
| JP 2007-183835 A | 19 Jul. 2007 | (Family: none) | |
| JP 2006-266760 A | 05 Oct. 2006 | US 2007/0032949 A1 paragraphs [0097]-[0102] CN 1837755 A | |
| JP 2002-77134 A | 15 Mar. 2002 | (Family: none) | |
| JP 2018-54503 A | 05 Apr. 2018 | US 2018/0089446 A1 paragraphs [0216]-[0220] | |
| WO 2019/239456 A1 | 19 Dec. 2019 | (Family: none) | |

INTERNATIONAL SEARCH REPORT
Information on patent family members

International application No.
PCT/JP2021/001366

Form PCT/ISA/210 (patent family annex) (January 2015)

**EP 4 092 542 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017111501 A